# EUROPEAN PATENT SPECIFICATION

(11) **EP 2 146 602 B1**
(45) Date of publication and mention of the grant of the patent: **20.04.2011**
(21) Application number: 08750662.2
(22) Date of filing: 22.05.2008
(51) Int. Cl.: A47C 21/04, A01M 17/00

(54) **METHOD AND APPARATUS FOR ALLEVIATING INSECT INFESTATION IN BEDDING**
VERFAHREN UND VORRICHTUNG ZUR VERMINDERUNG DES INSEKTENBEFALLS VON BETTEN
PROCÉDÉ ET APPAREIL POUR ENTRAVER UNE INFESTATION D'INSECTES DE LIT

(30) Priority: 23.05.2007 GB 0709837
(43) Date of publication of application: 27.01.2010
(73) Proprietor: Deighan, Lawrence, Edinburgh EH7 6TL (GB)
(72) Inventor: Deighan, Lawrence, Edinburgh EH7 6TL (GB)
(74) Representative: Coret, Sophie V.G.A.
(86) International application number: PCT/GB2008/001737
(87) International publication number: WO 2008/142410

(56) References cited:
- WO-A-97/38607
- GB-A- 2 334 889
- US-A- 5 555 579
- US-A- 5 894 615
- US-A1- 2005 262 639

## Description

The present invention relates to a method and apparatus for alleviating insect infestation in and in particular, but not exclusively, to a bedding mattress which alleviates infestations of insects such as bed bugs, dust mites and the like.

Mattresses used in bedding are generally made of cotton or polyester fibres, puffed up to form batting. The spacing between the fibres allows a flow of air while providing the necessary cushioning effect for an individual to gain support and comfort when sleeping on the mattress. The materials in combination with the air gaps and the heat generated by one sleeping on the mattress are known to provide ideal living conditions for insects such as bed bugs and dust mites together with fungi and bacteria. Such infestations cause ill health in terms of irritation to the skin and allergies. In particular dust mites droppings are believed to be the largest cause of asthma in small children.

There are a number of standard techniques used by individuals in an attempt to reduce or eliminate insects, fungi and bacteria from mattresses or bedding. A polyurethane coated cloth can be located over the mattress to prevent the dust mites, bed bugs and other insects finding a route into the mattress. However, users find that they sweat easily when sleeping upon such a "plastic like coating". An alternative is to provide a cover, which is formed of very tightly woven fabric. A disadvantage of this approach is that the fabric can be noisy when an individual moves around during their sleep. Non-woven fabrics made from plastic fibres (high density polyethylene) have also been used but these have a tendency to tear. The latest developments are to provide an electrostatic air filter fibre layer between the bedding and a sheet. Full tests on these approaches have not been carried out yet, but the material of the filter fibre layer is expensive. As a result many individuals have resorted to using merely a polythene sheet over the mattress where available. Such an arrangement not only causes excess sweating by the user, but is also unsafe for use with infants and children as the material is a non-breathable.

All of these known techniques are used in an attempt to prevent the insects gaining entry to the mattress. Other approaches have been proposed in an attempt to alleviate or destroy the insects once they have entered the mattress or bedding. These techniques use insecticides or temperature to kill the insects.

Spraying the mattress with insecticide is undesirable as the room must be suitably ventilated, sufficient time must be given after application before the mattress can be used again and there is a risk of the user having an allergic reaction to the chemicals.

High heat and extreme cold are also known to kill most of the insects. GB2334889 describes an apparatus for killing dust mites in a domestic environment. The apparatus comprises an inflatable bag which partially covers the mattress. Once in place heated air is introduced to the bag by use of a fan. There is an outlet port for the air to escape which includes a filter to 'capture' the dust mites and their droppings. By increasing the temperature in the bag to above 80° the heat kills the mites and also acts as a dehumidifier which reduces the available moisture needed for the dust mites to survive. It is suggested that the bag is placed over the mattress and operated for a few hours to be effective.

The main disadvantage of this system is that all the bedding must be removed and the mattress exposed before the bag is placed on the mattress. Additionally as the bag remains in place for several hours it is very intrusive to anyone using the room in which the bed is located. The bag is also difficult to install as a seal must be maintained around the edges. The fan can be noisy and it's use creates dust in the room which could be harmful to the user. Because of these drawbacks, a user is less likely to use the apparatus frequently and consequently the dust mite population will increase.

A bed which can be cooled for human comfort is described in WO 97/38607.

It is therefore an object of at least one embodiment of the present invention to provide method for alleviating insect infestation which mitigates at least some of the disadvantages of prior art systems.

It is a further object of at least one embodiment of the present invention to provide a bedding mattress for alleviating insect infestation which can be operated with the sheets and other bedding in place.

It is a further object of at least one embodiment of the present invention to provide a bedding mattress for alleviating insect infestation which can be left on the bed between treatments and when the bed is in use.

According to a first aspect of the present invention there is provided a method of alleviating insect infestation in bedding, the method comprising the steps:
(a) providing a cooling member, the member comprising an enclosed compartment having a coolant located therein and means to pump the coolant through the compartment;
(b) providing a temperature control unit to control the temperature of the coolant;
(c) providing a timer to operate the pump and control unit over a set time period;
(d) locating the cooling member under at least two bedding members;
(e) when the bedding is not in use, operating the temperature control unit and the pump for a set time period;
(f) cooling at least one of said bedding members and thereby killing insects located therein.

In this way, the cooling member can be located under a mattress and sheet with the mattress being cooled sufficiently to kill insects such as dust mites when the bed is not in use.

Preferably the temperature of the coolant is controlled to operate in the range 0° to 9°C. Such a temperature is effective in killing bed bugs. More preferably the coolant is controlled to operate in the range 0° to 4°C. This assists in ensuring the first bedding member is sufficiently cooled. Advantageously the coolant is recycled in a closed loop so that a user does not have to come in contact with it.

Preferably the set time period is in hours. The control unit may also be set to operate for a set time period in a pattern. The pattern may be daily. In an embodiment of the invention the temperature is set for several hours daily.

Preferably the first bedding member comprises a batting. Such a puffed up construction is found in feathers, foam, cotton and polyester fibres which typically form mattresses, pillows and cushions in bedding. This is the most likely location for insects to locate in bedding.

Preferably the second member is a removable sheet. Such a removable sheet or cover can be washed to remove any insect infestation, but can remain in place while the method is undertaken. In this way a bed does not have to be stripped before the method is used.

Preferably the cooling member is sized to laterally extend to substantially the size of the first bedding member. This ensures that the first bedding member is uniformly cooled.

Preferably the enclosed compartment is sized to match the length and width of a standard mattress. In this way a standard mattresses may be located on one or both sides of the cooling member. The cooling member may also be located between a standard mattress and the bed base. Alternatively, the cooling member may be built in between layers of a foam mattress.

According to a second aspect of the present invention there is provided a coolant apparatus for use in the method of the first aspect, the apparatus comprising a cooling member being an enclosed compartment having a coolant located therein and means to pump the coolant through the compartment, a temperature control unit to control the temperature of the coolant and a timer to operate the pump and control unit over a set time period.

Preferably, the enclosed compartment contains a flexible tubing array embedded in a gel with the coolant passing through the array.

Advantageously the coolant is in a sealed enclosure. More preferably the tubing is in a closed loop. In this way the fluid is re-cycled and is kept out of contact from a user.

Preferably the enclosed compartment is a cover made of an allergen free PVC. The cover may include an additional covering. The additional covering may be a washable cotton covering. Preferably the washable covering is removable so that it may be separately cleaned or disinfected.

Preferably the temperature control unit is a cooling unit. Preferably also the unit comprises one or more peltier modules. The modules may be fixed on to a thermo conductive block. Advantageously the tube passes through the thermo conductive block. In a preferred embodiment the tube passes twice through the thermo conductive block. Preferably heat sinks are located in the unit to dissipate the heat generated from the peltier modules.

Preferably the gel is propylene glycol gel. Such a gel spreads the temperature evenly over the bedding mattress.

Embodiments of the present invention will now be described, by way of example only, with reference to the accompanying drawings of which:
Figure 1 is a schematic illustration of a bedding mattress according to an embodiment of the present invention, where sections have been cut-away to show internal features;
Figures 2(a) and 2(b) are internal plan views of a temperature control unit for use with the bedding mattress of Figure 1;
Figure 3 is an exploded schematic illustration of the bedding mattress of Figure 1 arranged in a standard bed; and
Figures 4(a) and 4(b) are illustrations of a bedding mattress according to an alternative embodiment of the present invention.

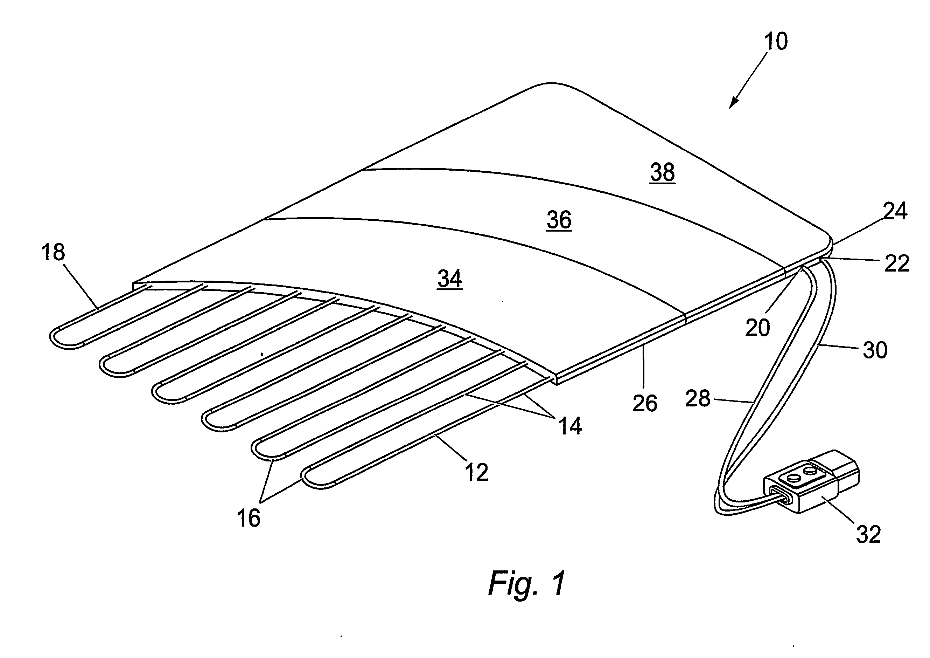

Reference is initially made to Figure 1 of the drawings which illustrates a cooling member in the form of a bedding mattress, generally indicated by reference numeral 10, according to an embodiment of the present invention. Mattress 10 includes a flexible hose or tubing 12 which is arranged to extend as a plurality of straight lengths of tubing 14 positioned in parallel across the mattress 10. In the embodiment shown, twelve straight sections 14 are illustrated with curved portions 16 joining adjacent ends to provide a continuous tubing path through the mattress 10. The farthest straight section 18 will form a horizontal path across the mattress transverse to the sections 14, so that first and second sections 20,22 respectively, exit the mattress 10 adjacent to each other on an upper end 24 of a side 26 of the mattress 10. On exiting the mattress 10, the two lengths 28,30 of tubing 12 extend into a control unit 32.

Within the mattress 10, the tubing 12 is embedded in a polypropylene glycol gel 34. The gel 34 is formed as a slab which encapsulates the tubing 12. The gel 34 has sufficient rigidity to hold the tubing 12 in its array, while being able to flex with the tubing 12. Additionally the gel is selected for its heat transfer properties.

The gel 34 is protected from the environment by a PVC cover 36. The cover 36 is sized to both the gel 34 and the standard width and length of a bed. Those in the art will appreciate that there are a number of dimensions of beds which are referred to as standard. Such standards are dependant not only on whether they are single, double or king size but also on the country of use. The PVC cover is also allergen free to prevent insects from embedding themselves in the cover.

For the comfort of a user, a fabric sheet is formed as an additional cover 38 on the mattress 10. The additional cover 38 is made of machine washable cotton sheeting sized to fit over the cover 36. By making the sheeting machine washable it can be removed as frequently as other sheets on the bed and washed at high temperatures e.g. 90°. This kills and removes insects such as dust mites and their droppings.

External to the cover 36 and the additional cover 38, the two lengths 28,30 of tubing 12 extend into the control unit 32. The control unit may be located on a bedside unit or on the floor in a similar manner to control units of electric blankets.

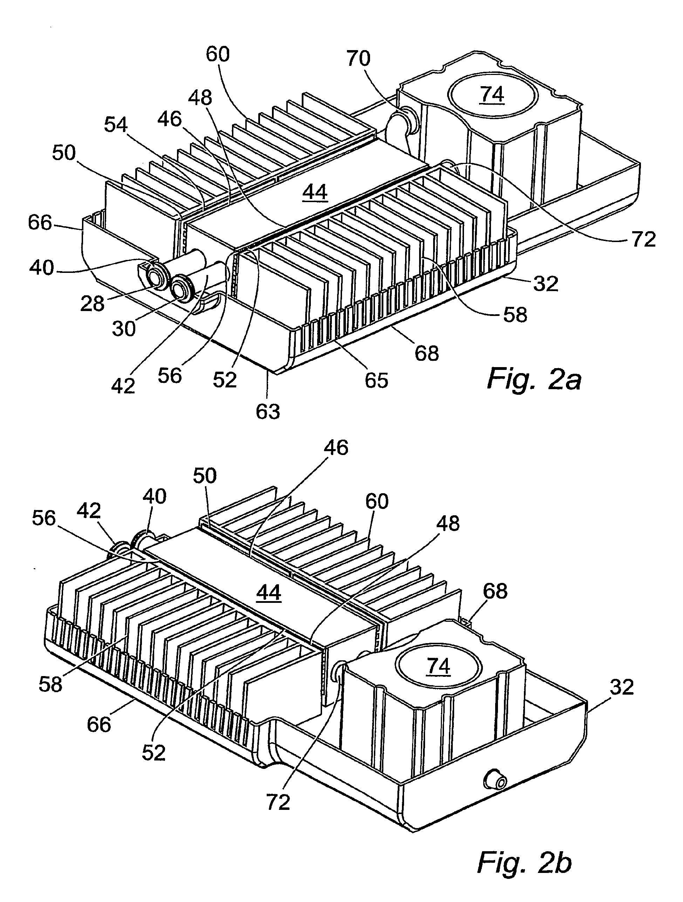

Reference is now made to Figures 2 of the drawings which illustrates a portion of a control unit 32 suitable for use in the present invention. The portion shown illustrates the cooling portion of the unit 32. Tube portions 28,30 enter the unit 32 through ports 40,42 respectively. The tubes 28,30 are arranged to lie in parallel and extend longitudinally through the unit 32. Arranged longitudinally in the centre of the unit 32 is a thermo conductive block 44. The thermo conductive block 44 is as known in the art for transmitting heat through its material in use. The block is rectangular to provide parallel arranged outer surfaces against 46,48 which are arranged against plate like peltier modules 50,52 as are known in the art. Arranged against the opposing faces 54,56 of the peltier modules 50,52 are heat sinks 58,60. The heat sinks 58,60 are multi-fin designs to dissipate heat from the unit 32 safely. The fins 62,64 are arranged along the longitudinal sides 66,68 of the unit 32.

The unit 32 is encased in a toughened plastic housing 63. The housing includes vents 65 arranged along the sides 66,68 where the heat sinks 58,60 are positioned. This allows heat to dissipate from the unit 32. On an upper surface of the Unit (not shown) dials are arranged for setting the temperature and time period.

The tubes 28,30 exit the thermo conductive block 44 and connect to the input 70 and the output 72, respectively, of an electric pump 74. The electric pump 74 acts on fluid within the tubing 12 to keep the fluid circulating through the tubing 12 in a continuous path.

Contained within the tubing 12 is a coolant fluid. The fluid may be an antifreeze or similar mixture which holds and maintains a low temperature. The tubing 12 is prefilled and sealed so that a user does not need to gain access to the fluid or top it up at any time.

Also located in the unit 32, though not shown, is a timer control and a temperature setting control. The timer allows a user to set a time period and the temperature control allows a user to select a temperature for the fluid. On switching on the time period, the pump 74 and the peltier modules 50,52 are turned on for the period selected. The selection of the temperature, between 0° and 9°C, causes the peltier modules to be set to remove heat from the thermo conductive block 44 until the temperature of the fluid within the tube 12 is at or below the selected temperature.

The unit 32 is connected to mains power and this may be through a 12V mains adaptor.

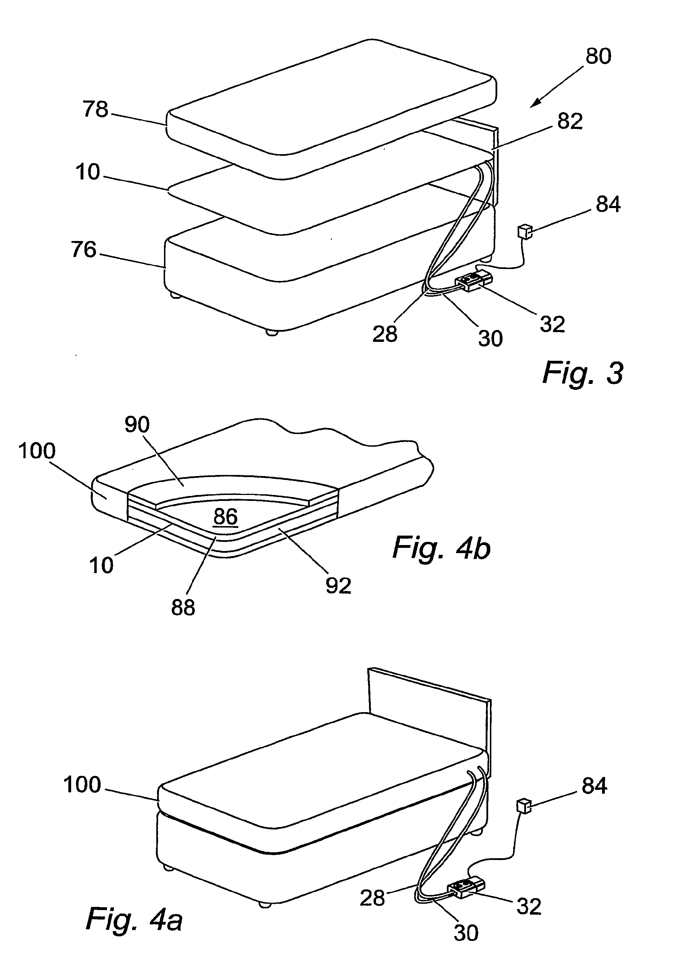

In use, the mattress 10 is located between a bed base 76 and a standard mattress 78. This is as illustrated in Figure 3. The mattress 10 is sized to match the dimensions of the mattress 78 and base 76. The mattress 10 is sufficiently thin so that it does not affect the use of the bed 80. The tubes 28,30 are arranged towards the headboard 82 of the bed 80 so that standard bed linen and sheeting can be located on the mattress 78 without obstruction. The control unit 32 is located on the floor beside the bed 80 and the unit 32 is connected to an adjacent mains socket 84.

When the user is not in the bed 80, such as when they rise in the morning, the user switches the unit 32 to operate by selecting a time period, for example one hour, and a temperature, for example 0°C. The choice of time and temperature will be dependent on the ambient temperature in the room, the perceived temperature of the mattress and the humidity in the bedroom. Thus by simply setting two dials a user can operate the system without having to strip the bed of sheets and linen or placing apparatus over the mattress which needs to be stored separately from the bed.

On turning on the unit 32, the pump 74 switches on and begins to push the coolant through the tube 12. The coolant fluid will move in a one way path through the tubing 12 in a track which travels back and forth through the gel 34 and return to the pump 74. As the coolant passes through the thermo conductive block 44, the peltier modules 50,52 act to lower the temperature of the block 44 and consequently the temperature of the coolant fluid. As the tubes 28,30 are arranged to pass through the block 44 to maximise the contact area between each, the speed of the pump can be set to provide a sufficient flow rate to prevent the coolant overheating as it passes through the gel 34, before returning to the block 44. As the coolant is cooled on passage through the unit 32, heat is dissipated through the large heat sinks 58,60 to the sides 66,68 of the unit 32.

Over the selected time period, the coolant fluid is pumped around the tubing 12 at the desired temperature. As the fluid travels, the coolant within cools the gel 34 surrounding the tube 12 and brings the temperature of the gel slab 34 down to close to the selected temperature. It will be appreciated that the entire mattress could be filled with the coolant but this may provide a mattress with uneven cooling depending on the path taken by the coolant between the inlet and the outlet.

A refrigerated panel is thus provided under the mattress 78. The mattress 10 of the present invention acts to refrigerate the standard mattress 78 and bring its temperature down to the set temperature. As the set temperature is between 0° and 4°C, this is sufficient to kill insects within the standard mattress 78 when the temperature is maintained for a time period e.g. one hour. The present invention is particularly useful for the elimination of bed bugs.

Once the time period is complete, the unit 32 turns off and the bed 80 is ready for use.

Reference is now made to Figures 4 of the drawings which illustrates an alternative embodiment of the present invention. Mattress 100 comprises a bedding mattress 10 as described herein with reference to the earlier figures. Mattress 10 does not require the additional cover 38 as the upper and lower surfaces 86,88 respectively are located against the foam or other layers 90,92 of a standard mattress. In this way the present invention is embedded in between layers of a mattress to construct a mattress which has a self cooling unit incorporated therein. The mattress 100 is supplied as a self contained unit with the tubes 28,30 extending therefrom and connected to a control unit which is ready to be connected to the mains for immediate use.

The principal advantage of the present invention is that it provides a method of alleviating insect infestation in bedding.

A further advantage of the present invention is that it provides a bedding mattress for alleviating insect infestation which can be operated with the sheets and other bedding in place.

A yet further advantage of the present invention is that it provides a bedding mattress for alleviating insect infestation which can be left on the bed between treatments and when the bed is in use.

Various modifications may be made to the invention herein described without departing from the scope thereof. For example, the tubing may be arranged in any array through the gel. The path of the coolant fluid need not be continuous, but may be divided. The cross-sectional area of the tubing may be varied to vary the speed and hence the cooling efficiency at which the coolant travels through the gel. The gel may be formed of any flexible material through which the cooling effect can spread while providing cushioning. The cooling unit may operate by any known technique as an alternative to peltier cooling. While a mattress is described, it will be apparent to those skilled in the art that the present invention can be adapted for different forms of bedding such as pillows, cushions, duvets and cot mattresses.

## Claims

1. A method of alleviating insect infestation in bedding, the method comprising the steps:
(a) providing a cooling member, the member comprising an enclosed compartment having a coolant located therein and means (74) to pump the coolant through the compartment;
(b) providing a temperature control unit (32) to control the temperature of the coolant;
(c) providing a timer to operate the pump and control unit (32) over a set time period;
(d) locating the cooling member under at least two bedding members;
(e) when the bedding is not in use, operating the temperature control unit and the pump for a set time period and cooling at least one of said bedding members and thereby killing insects located therein.

2. A method as claimed in claim 1 where the temperature of the coolant is controlled to operate in the range 0° to 9°C.

3. A method as claimed in claim 2 wherein the temperature of the coolant is controlled to operate in the range 0° to 4°C.

4. A method as claimed in any preceding claim wherein the coolant is recycled in a closed loop.

5. A method as claimed in any preceding claim wherein the set time period is in hours.

6. A method as claimed in any preceding claim wherein the timer is set to operate for a set time period in a pattern.

7. A method as claimed in any preceding claim wherein the first bedding member comprises a batting.

8. A method as claimed in any preceding claim wherein the second member is a removable sheet (38).

9. A method as claimed in any preceding claim wherein the cooling member is sized to laterally extend to substantially the size of the first bedding member.

10. A cooling apparatus for use in the method of any one of claims 1 to 9, the apparatus comprising a cooling member (12) being an enclosed compartment having a coolant located therein and means (74) to pump the coolant through the compartment, a temperature control unit (32) to control the temperature of the coolant and a timer to operate the pump and control unit over a set time period, wherein the enclosed compartment contains a flexible tubing array (14) embedded in a gel (34) with the coolant passing through the array (14).

11. A cooling apparatus as claimed in claim 10 wherein the coolant is in a sealed enclosure (36).

12. A cooling apparatus as claimed in any of claims 10 to 11 wherein the temperature control unit is a cooling unit comprising one or more peltier modules (50, 52).

13. A cooling apparatus as claimed in claim 12 wherein the modules are fixed on to a thermo conductive block (44) and the tubing (12) passes through the thermo conductive block.

14. A cooling apparatus as claimed in any one of claims 10 to 13 wherein the gel (34) is propylene glycol gel.

## Patentansprüche

1. Ein Verfahren zur Verringerung von Insektenbefall in Bettwaren, wobei das Verfahren die folgenden Schritte beinhaltet:
(a) Bereitstellen eines Kühlelements, wobei das Element eine abgeschlossene Kammer mit einem darin befindlichen Kühlmittel und Mittel (74) zum Pumpen des Kühlmittels durch die Kammer beinhaltet;
(b) Bereitstellen eines Temperaturreglers (32), um die Temperatur des Kühlmittels zu regeln;
(c) Bereitstellen eines Zeitgebers, um die Pumpe und den Regler (32) für eine festgelegte Zeitdauer zu betreiben;
(d) Anordnen des Kühlelements unter mindestens zwei Bettwarenelementen;
(e) Betreiben des Temperaturreglers und der Pumpe für eine festgelegte Zeitdauer und Kühlen von mindestens einem der Bettwarenelemente und **dadurch** Abtöten der darin befindlichen Insekten, wenn die Bettwaren nicht benutzt werden.

2. Verfahren gemäß Anspruch 1, wobei die Temperatur des Kühlmittels geregelt wird, um in dem Bereich von 0° bis 9° betrieben zu werden.

3. Verfahren gemäß Anspruch 2, wobei die Temperatur des Kühlmittels geregelt wird, um in dem Bereich von 0° bis 4° betrieben zu werden.

4. Verfahren gemäß einem der vorhergehenden Ansprüche, wobei das Kühlmittel in einem geschlossenen Kreis wieder verwendet wird.

5. Verfahren gemäß einem der vorhergehenden Ansprüche, wobei die festgelegte Zeitdauer in Stunden angegeben ist.

6. Verfahren gemäß einem der vorhergehenden Ansprüche, wobei der Zeitgeber eingestellt ist, um für eine festgelegte Zeitdauer gemäß einem Muster betrieben zu werden.

7. Verfahren gemäß einem der vorhergehenden Ansprüche, wobei das erste Bettwarenelement eine Füllung beinhaltet.

8. Verfahren gemäß einem der vorhergehenden Ansprüche, wobei das zweite Element ein entfernbares Laken (38) ist.

9. Verfahren gemäß einem der vorhergehenden Ansprüche, wobei das Kühlelement bemessen ist, um sich lateral auf im Wesentlichen die Größe des ersten Bettwarenelements zu erstrecken.

10. Eine Kühlvorrichtung zur Verwendung bei dem Verfahren gemäß einem der Ansprüche 1 bis 9, wobei die Vorrichtung ein Kühlelement (12), das eine abgeschlossene Kammer mit einem darin befindlichen Kühlmittel und Mitteln (74) zum Pumpen des Kühlmittels durch die Kammer ist, einen Temperaturregler (32) zum Regeln der Temperatur des Kühlmittels und einen Zeitgeber zum Betreiben der Pumpe und des Reglers für eine festgelegte Zeitdauer beinhaltet, wobei die abgeschlossene Kammer eine in einem Gel (34) eingeschlossene biegsame Verrohrungsanordnung (14) enthält, wobei das Kühlmittel durch die Anordnung (14) läuft.

11. Kühlvorrichtung gemäß Anspruch 10, wobei sich das Kühlmittel in einer abgedichteten Abschließung (36) befindet.

12. Kühlvorrichtung gemäß einem der Ansprüche 10 bis 11, wobei der Temperaturregler ein Kühler ist, der ein oder mehrere Peltier-Module (50, 52) beinhaltet.

13. Kühlvorrichtung gemäß Anspruch 12, wobei die Module auf einem Wärme leitenden Block (44) fixiert sind und die Verrohrung (12) durch den Wärme leitenden Block läuft.

14. Kühlvorrichtung gemäß einem der Ansprüche 10 bis 13, wobei das Gel (34) Propylenglycolgel ist.

## Revendications

1. Une méthode pour atténuer une infestation d'insectes dans de la literie, la méthode comprenant les étapes consistant à :
(a) fournir un élément de refroidissement, l'élément comprenant un compartiment clos dans lequel est placé un agent de refroidissement et un moyen (74) pour pomper l'agent de refroidissement à travers le compartiment ;
(b) fournir une unité de contrôle de température (32) pour contrôler la température de l'agent de refroidissement ;
(c) fournir un minuteur pour faire fonctionner la pompe et l'unité de contrôle (32) sur une période de temps déterminée ;
(d) placer l'élément de refroidissement sous au moins deux éléments de literie ;
(e) lorsque la literie n'est pas en utilisation, faire fonctionner l'unité de contrôle de température et la pompe pendant une période de temps déterminée et refroidir au moins un desdits éléments de literie et exterminer de ce fait des insectes se trouvant dans celui-ci.

2. Une méthode telle que revendiquée dans la revendication 1 où la température de l'agent de refroidissement est contrôlée de façon à fonctionner dans la gamme allant de 0° à 9°C.

3. Une méthode telle que revendiquée dans la revendication 2 dans laquelle la température de l'agent de refroidissement est contrôlée de façon à fonctionner dans la gamme allant de 0° à 4°C.

4. Une méthode telle que revendiquée dans n'importe quelle revendication précédente dans laquelle l'agent de refroidissement est recyclé dans une boucle fermée.

5. Une méthode telle que revendiquée dans n'importe quelle revendication précédente dans laquelle la période de temps déterminée est comptée en heures.

6. Une méthode telle que revendiquée dans n'importe quelle revendication précédente dans laquelle la minuterie est réglée de façon à fonctionner selon un modèle pendant une période de temps déterminée.

7. Une méthode telle que revendiquée dans n'importe quelle revendication précédente dans laquelle le premier élément de literie comprend une nappe ouatée.

8. Une méthode telle que revendiquée dans n'importe quelle revendication précédente dans laquelle le deuxième élément est un drap pouvant être retiré (38).

9. Une méthode telle que revendiquée dans n'importe quelle revendication précédente dans laquelle l'élément de refroidissement est dimensionné pour s'étendre latéralement à substantiellement la dimension du premier élément de literie.

10. Un appareil de refroidissement destiné à être utilisé dans la méthode de n'importe laquelle des revendications 1 à 9, l'appareil comprenant un élément de refroidissement (12), lequel est un compartiment clos dans lequel est placé un agent de refroidissement, et un moyen (74) pour pomper l'agent de refroidissement à travers le compartiment, une unité de contrôle de température (32) pour contrôler la température de l'agent de refroidissement et une minuterie pour faire fonctionner la pompe et l'unité de contrôle sur une période de temps déterminée, dans lequel le compartiment clos contient un réseau de tubage flexible (14) encastré dans un gel (34), l'agent de refroidissement traversant le réseau (14).

11. Un appareil de refroidissement tel que revendiqué dans la revendication 10 dans lequel l'agent de refroidissement est dans une enceinte étanche (36).

12. Un appareil de refroidissement tel que revendiqué dans n'importe lesquelles des revendications 10 et 11 dans lequel l'unité de contrôle de température est une unité de refroidissement comprenant un ou plusieurs modules de Peltier (50, 52).

13. Un appareil de refroidissement tel que revendiqué dans la revendication 12 dans lequel les modules sont fixés sur un bloc thermoconducteur (44) et le tubage (12) traverse le bloc thermoconducteur.

14. Un appareil de refroidissement tel que revendiqué dans n'importe laquelle des revendications 10 à 13 dans lequel le gel (34) est du gel propylèneglycol.
